(19) Europäisches Patentamt / European Patent Office / Office européen des brevets

(11) **EP 2 994 969 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(21) Anmeldenummer: **14747320.1**

(22) Anmeldetag: **18.07.2014**

(51) Int Cl.:
*H02J 3/16* ^(2006.01)    *H02J 3/18* ^(2006.01)
*H02J 3/32* ^(2006.01)    *H02J 3/36* ^(2006.01)
*H02M 7/483* ^(2007.01)

(86) Internationale Anmeldenummer:
**PCT/EP2014/065475**

(87) Internationale Veröffentlichungsnummer:
**WO 2015/011039 (29.01.2015 Gazette 2015/04)**

(54) **ANORDNUNG ZUR KOMPENSATION VON BLINDLEISTUNG UND WIRKLEISTUNG IN EINEM HOCHSPANNUNGSNETZ**

ASSEMBLY FOR COMPENSATING REACTIVE POWER AND ACTIVE POWER IN A HIGH-VOLTAGE NETWORK

ENSEMBLE PERMETTANT LA COMPENSATION D'UNE PUISSANCE RÉACTIVE ET D'UNE PUISSANCE ACTIVE DANS UN RÉSEAU À HAUTE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2013 DE 102013214693**

(43) Veröffentlichungstag der Anmeldung:
**16.03.2016 Patentblatt 2016/11**

(73) Patentinhaber: **Siemens Aktiengesellschaft**
**80333 München (DE)**

(72) Erfinder:
• **PIESCHEL, Martin**
**90473 Nürnberg (DE)**
• **KNAAK, Hans-Joachim**
**91054 Erlangen (DE)**
• **PEREIRA, Marcos**
**91056 Erlangen (DE)**

(56) Entgegenhaltungen:
**WO-A1-2010/040388    DE-A1- 3 743 997**

• **ABRAHAM J VISSER ET AL: "Transformerless Series Sag Compensation With a Cascaded Multilevel Inverter", IEEE TRANSACTIONS ON INDUSTRIAL ELECTRONICS, IEEE SERVICE CENTER, PISCATAWAY, NJ, USA, Bd. 49, Nr. 4, 31. August 2002 (2002-08-31), XP011073753, ISSN: 0278-0046**

**Beschreibung**

Die Erfindung betrifft eine Anordnung zur Kompensation von Blindleistung und Wirkleistung in einem Hochspannungsnetz.

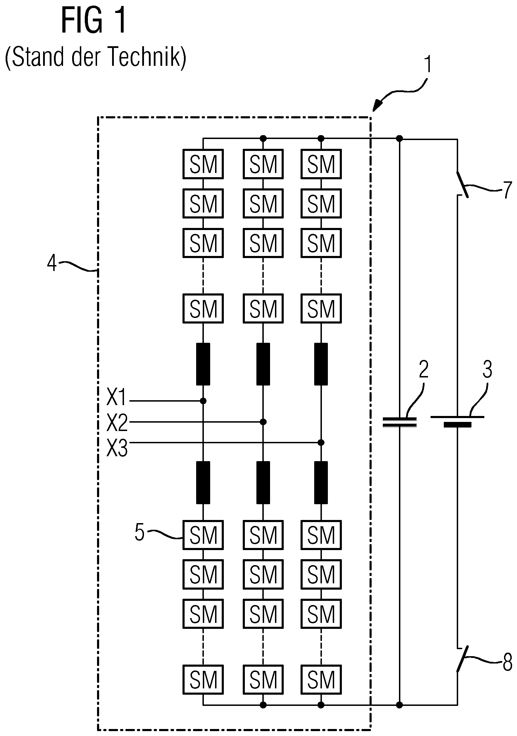

Fig. 1 zeigt eine herkömmliche Anordnung 1 zur Kompensation von Blindleistung und Wirkleistung. Ein Kondensator 2 ist parallel zu einer Batterie 3 geschaltet, diese Komponenten sind über einen Konverter 4 mit den drei Phasen eines Wechselstromnetzes verbunden. Der Kondensator 2 und die Batterie 3 sind an der Gleichspannungsseite des Konverters 4 angeschlossen. Der Kondensator 2 dient zur Kompensation von Blindleistung, die Batterie 3 zur Kompensation von Wirkleistung. Der Konverter 4 umfasst für jede Phase mehrere in Reihe geschaltete Submodule 5, um die in einem Hochspannungsnetz benötigte Spannungsfestigkeit zu erzielen. Mittels der Schalter 7, 8 kann die Batterie 3 von den übrigen Komponenten der Anordnung 1 getrennt werden.

Fig. 2 zeigt ein Beispiel eines derartigen Submoduls 5, das aus einem Transistor und einer Diode besteht.

Fig. 3 zeigt ein alternatives Submodul 6, das aus einer Halbbrücke aus Halbleiterbauteilen und einem Kondensator besteht.

Diese herkömmliche, anhand der Figuren 1 - 3 erläuterte Anordnung zur Kompensation von Blindleistung und Wirkleistung bringt allerdings einige Probleme mit sich. Wenn die Kompensation von Blindleistung im Dauerbetrieb erfolgt, fließt in dem Kondensator 2 und der Batterie 3 permanent ein Strom, der zur Erwärmung und damit zur Reduzierung der Lebensdauer der empfindlichen Bauteile führt.

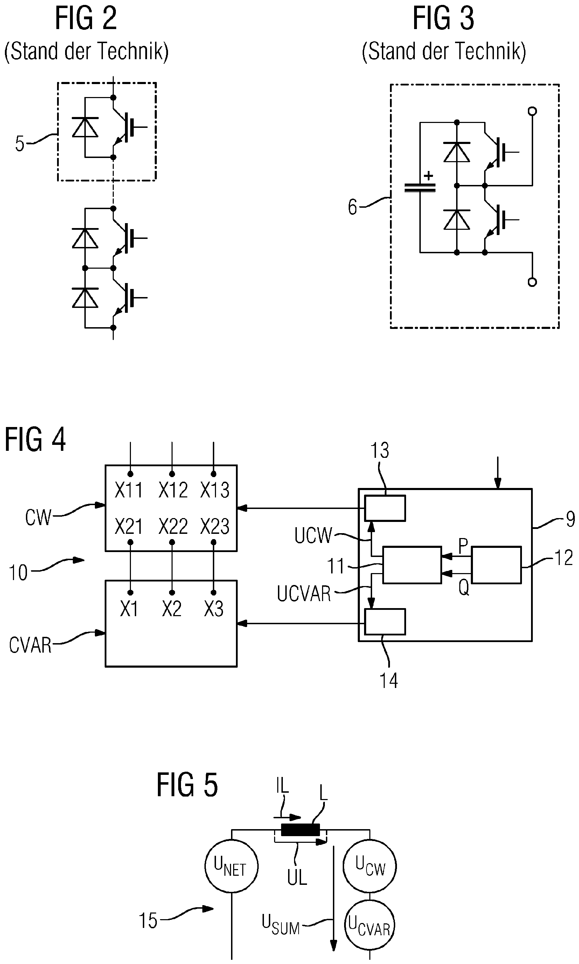

Falls die Spannung an der Batterie 3 kleiner als die Netzspannung ist, fließt ein Ladestrom unkontrolliert durch die Dioden der in den Figuren 2 und 3 gezeigten Submodule. Wegen der großen Kapazität des Energiespeichers kann beim Einschalten der Anordnung bei entladenem Energiespeicher ein sehr großer Strom fließen, was zu negativen Konsequenzen für das Hochspannungsnetz und den Konverter 4 führt.

Ein weiteres Problem tritt auf, wenn anstelle der Batterie 3 Doppelschichtkondensatoren als Energiespeicher vorgesehen sind. Bei der Wiedergewinnung der gespeicherten Energie sinkt die Kondensatorspannung mit der quadratischen Wurzel der Spannung. Da die Spannung am Energiespeicher nicht kleiner sein darf als die Spannung im Hochspannungsnetz, muss eine große Einschränkung der Energieausbeute in Kauf genommen werden. Ähnliche Probleme treten auch auf, wenn eine Batterie als Energiespeicher verwendet wird.

In der Druckschrift WO 2010/124706 A1 ist ein modularer, mehrstufiger Konverter vorgeschlagen worden, bei dem Energiespeichermodule direkt in den einzelnen Submodulen des Konverters integriert sind. Eine Leistungselektronikeinheit in Form eines "Chopper" oder eines Spannungs-Umwandlers wird verwendet, um einen Energiespeicher mit einem Submodul zu koppeln. Allerdings verursachen die benötigte Leistungselektronik und die zugehörige Drossel einen beträchtlichen Bauaufwand.

Die WO 2010/040388 A1 offenbart einen modularen Mehrstufenumrichter, der zur Regelung von Blindleistung und Wirkleistung in einem Wechselspannungsnetz eingerichtet ist. Jedes Phasenmodul des Mehrstufenumrichter weist eine Reihenschaltung von Umrichtermodulen in Vollbrückentopologie auf. Einige der Umrichtermodule sind als reaktive Umrichtermodule mit einem Kondensator ausgestattet und zum Austausch von Blindleistung mit dem Wechselspannungsnetz eingerichtet. Zugleich ist wenigstens eines der Umrichtermodule eines jeden Phasenmoduls ein aktives Umrichtermodul, das anstelle eines Kondensators eine Batterieeinheit aufweist. Das aktive Umrichtermodul tauscht mit dem Wechselspannungsnetz sowohl Blindleistung als auch Wirkleistung aus.

Der Erfindung liegt daher die Aufgabe zugrunde, eine Anordnung zur Kompensation von Blindleistung und Wirkleistung in einem Hochspannungsnetz anzugeben, die einfacher aufgebaut ist.

Zur Lösung dieser Aufgabe ist erfindungsgemäß eine Anordnung der eingangs genannten Art vorgesehen, die einen ersten Konverter aufweist, der für die Kompensation von Wirkleistung ausgebildet ist, sowie einen zweiten, in Reihe geschalteten Konverter, der für die Kompensation von Blindleistung ausgebildet ist, wobei die von der Anordnung gelieferte oder abgebbare Spannung der Summe der Spannungen des ersten Konverters und des zweiten Konverters entspricht, wobei die Konverter jeweils H-Brücken aufweisen. Die Anordnung ist dadurch gekennzeichnet, dass antiparallel geschaltete Thyristoren parallel zu den einzelnen H-Brücken des Konverters, der für die Kompensation von Wirkleistung ausgebildet ist, geschaltet sind. Die im Stand der Technik vorhandenen Probleme werden erfindungsgemäß durch eine Anordnung mit zwei in Reihe geschalteten Konvertern beseitigt, wobei der erste Konverter für die Wirkleistungskompensation ausgelegt und der zweite für die Blindleistungskompensation vorgesehen ist. Bei der erfindungsgemäßen Anordnung ist wesentlich, dass die Spannung der Konverteranordnung der Summe der Spannungen der beiden Konverter entspricht.

Erfindungsgemäß weist die Anordnung eine Steuereinheit auf, die zum Messen von in dem Hochspannungsnetz vorhandenen Spannungen und Strömen ausgebildet ist und die die von dem ersten und dem zweiten Konverter abgegebenen Spannungen derart festlegt, das eine geforderte Wirkleistung P und eine Blindleistung Q vom Hochspannungsnetz aufgenommen oder in das Hochspannungsnetz eingespeist wird.

Erfindungsgemäß steuert die Steuereinheit die beiden Konverter so, dass der erste Konverter allein die Wirkleistung und der zweite Konverter allein die Blindleistung kompensiert.

Es liegt auch im Rahmen der Erfindung, dass der erste Konverter, der für die Kompensation von Wirkleistung vorgesehen ist, wenigstens ein Energiespeicherelement aufweist oder mit einem Energiespeicher verbunden ist. Vorzugsweise kann das Energiespeicherelement als Kondensator oder Doppelschichtkondensator oder als Batterie ausgebildet sein.

Es wird bevorzugt, dass der erste Konverter und/oder der zweite Konverter eine Drossel aufweist beziehungsweise aufweisen.

Bei der erfindungsgemäßen Anordnung kann die Steuereinheit dazu ausgebildet sein, die von dem ersten Konverter abgegebene Spannung so zu regeln, dass sie in Phase mit oder gegenphasig zu dem durch den Konverter fließenden Strom ist. Vorzugsweise kann es vorgesehen sein, dass die Steuereinheit den für die Blindleistungskompensation vorgesehenen Konverter so steuert, dass der durch den Kondensator fließende Strom begrenzt ist.

Es liegt auch im Rahmen der Erfindung, dass die beiden Konverter jeweils eine H-Brücke aufweisen, die vorzugsweise aus Leistungshalbleiterschaltern aufgebaut ist. Vorzugsweise sind beide Konverter jeweils dreiphasig ausgebildet. Die Konverter können in einer Sternschaltung oder einer Dreiecksschaltung geschaltet sein.

Die Erfindung wird nachfolgend anhand von Beispielen unter Bezugnahme auf die Zeichnungen erläutert. Die Zeichnungen sind schematische Darstellungen und zeigen:

Fig. 1          eine herkömmliche Anordnung zur Kompensation von Blindleistung und Wirkleistung;

Fig. 2 u. 3     Submodule der herkömmlichen Anordnung von Fig. 1;

Fig. 4          eine Anordnung zur Kompensation von Blindleistung und Wirkleistung;

Fig. 5          ein Ersatzschaltbild der Anordnung;

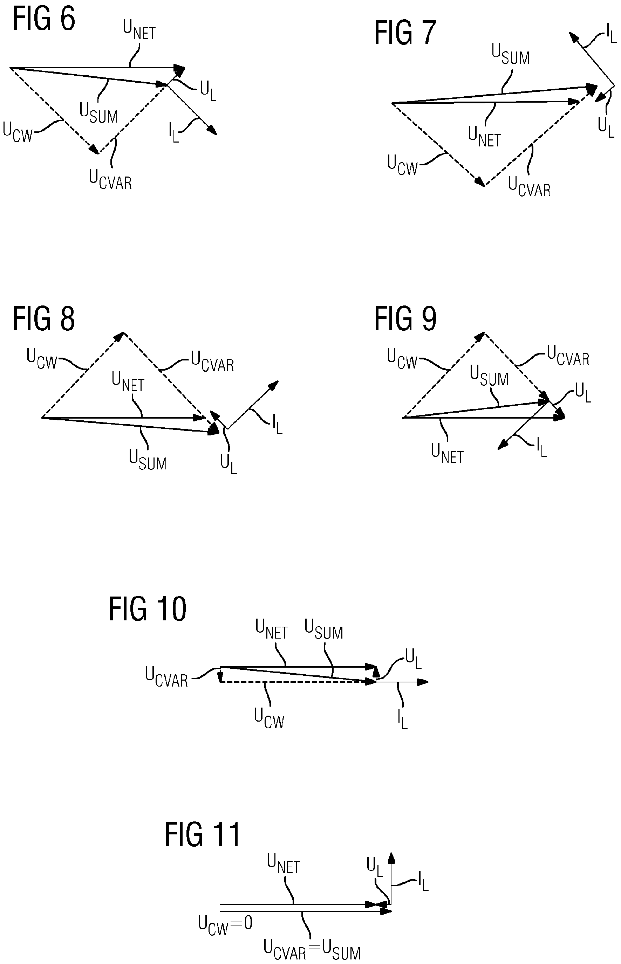

Fig. 6 - 11     Vektordiagramme der in der Anordnung auftretenden Spannungen und Ströme;

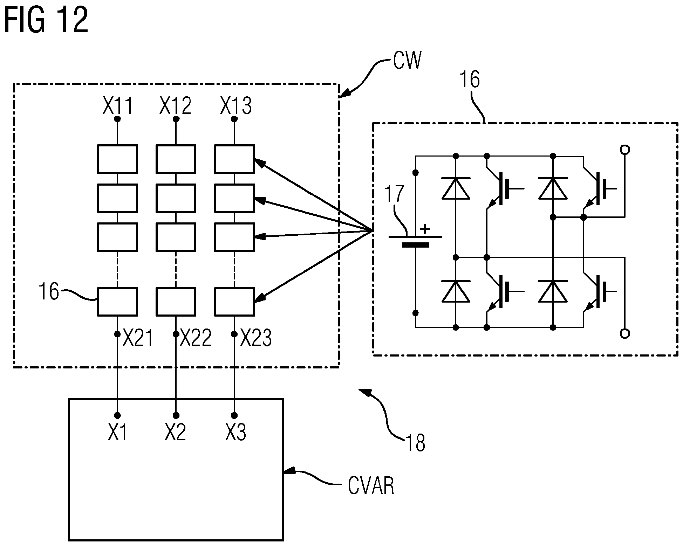

Fig. 12         ein weiteres Beispiel einer Anordnung zur Kompensation von Blindleistung und Wirkleistung;

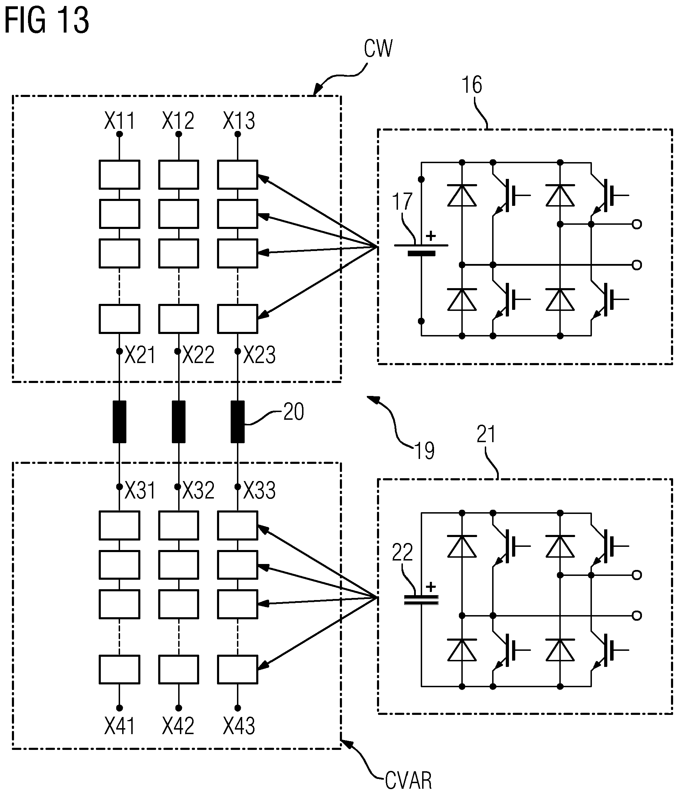

Fig. 13         ein weiteres Beispiel einer Anordnung zur Kompensation von Blindleistung und Wirkleistung;

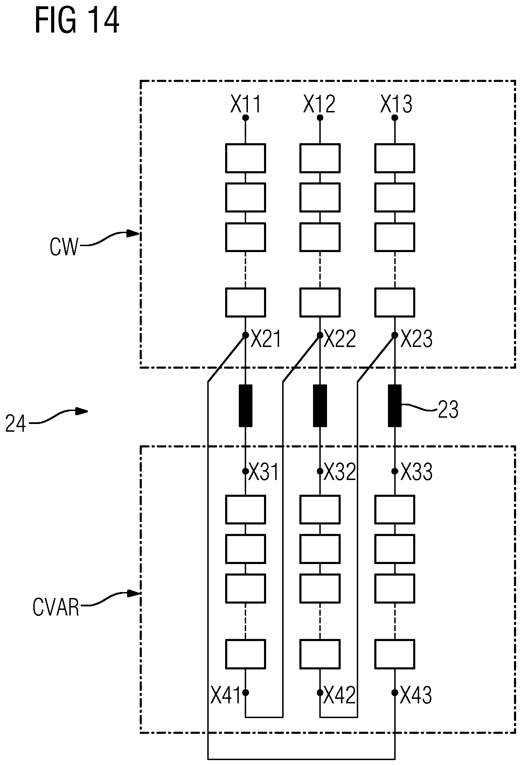

Fig. 14         ein weiteres Beispiel einer Anordnung zur Kompensation von Blindleistung und Wirkleistung;

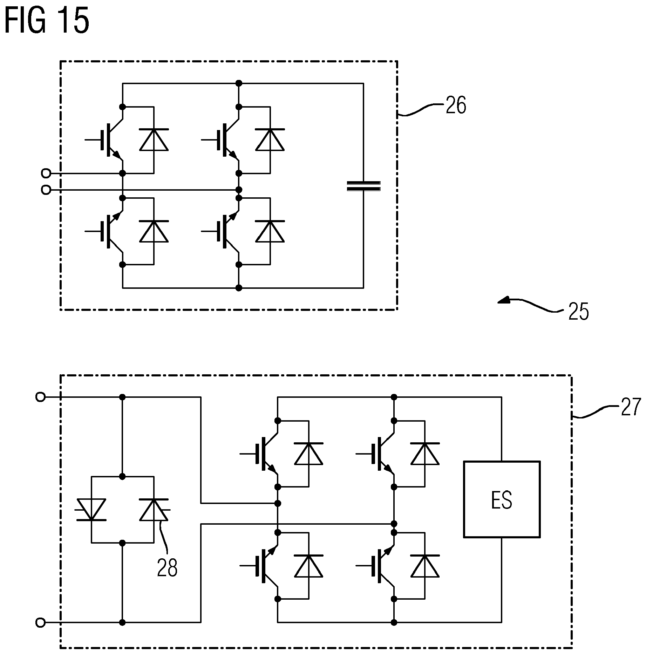

Fig. 15         ein Ausführungsbeispiel einer erfindungsgemäßen Anordnung;

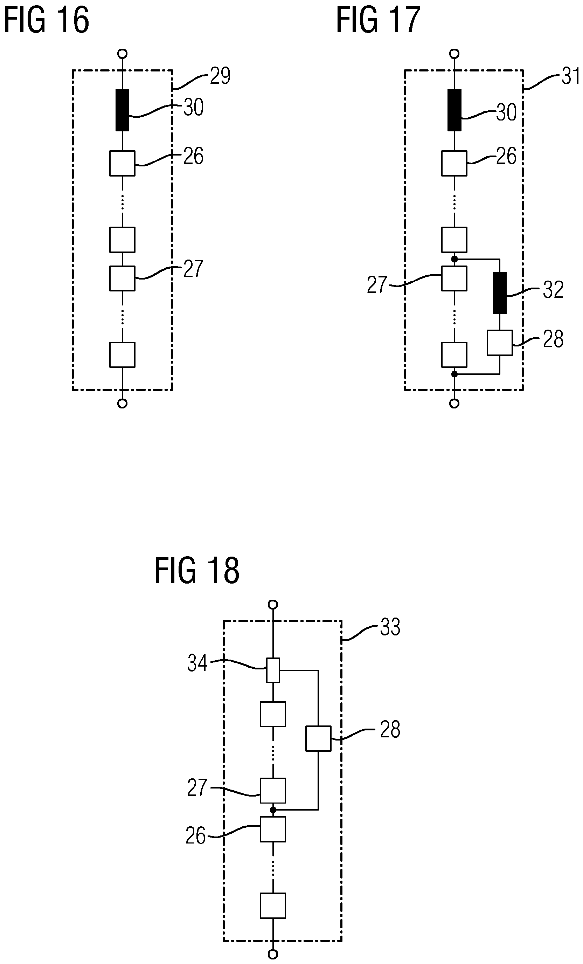

Fig. 16 - 18    weitere Ausführungsbeispiele erfindungsgemäßer Anordnungen zur Kompensation von Blindleistung und Wirkleistung; und

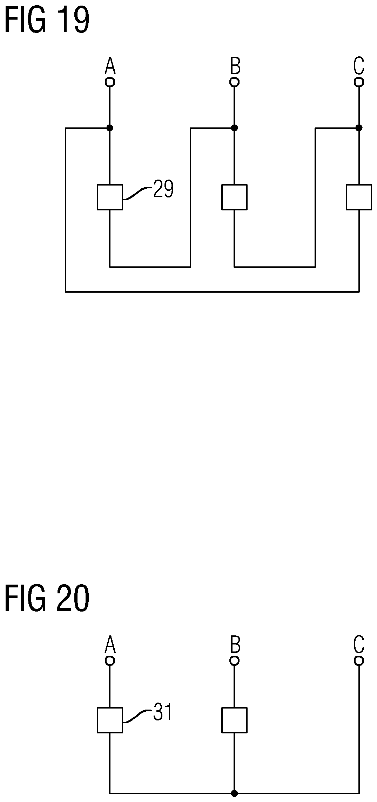

Fig. 19 - 22    Anwendungen der in den Fig. 16 - 18 gezeigten Anordnungen.

Fig. 4 zeigt eine Anordnung zur Kompensation von Blindleistung und Wirkleistung in einem Hochspannungsnetz, mit einem ersten Konverter CW, der für die Kompensation von Wirkleistung ausgebildet ist und einen zweiten damit in Reihe geschalteten Konverter CVAR, der für die Kompensation von Blindleistung ausgebildet ist. Die beiden Konverter CW, CVAR sind mit einer Steuereinheit 9 verbunden. Die in Fig. 4 gezeigte Anordnung 10 mit den beiden Konvertern CW, CVAR kann zwischen den Phasen des Netzes verbunden sein. Alternativ können Zweige vorgesehen sein, so dass eine Dreieckschaltung oder eine Sternschaltung mit verbundenem Sternpunkt entsteht. Bei der Anordnung 10 ist wesentlich, dass die Spannung (Gesamtspannung) durch die Summe der Spannungen der beiden Konverter CW, CVAR gebildet wird, dabei kann es sich sowohl um einzelne Phasenspannungen als auch eine mehrphasige Spannung handeln. Der Konverter CVAR besteht aus einzelnen Submodulen wie die in Fig. 1 gezeigte Anordnung, da er jedoch nur für die Kompensation von Blindleistung benötigt wird, werden weder eine Batterie noch Schalter benötigt.

Der Steuereinheit 9 werden Signale entsprechend den elektrischen Größen, die im Hochspannungsnetz gemessen werden, zugeführt. Die Steuereinheit 9 weist dazu einen Regler 12 auf, der Bestandteil der Steuereinheit 9 ist und die Blindleistung und Wirkleistung bestimmt, die entweder vom Hochspannungsnetz aufgenommen oder in das Netz eingespeist werden. Durch eine Recheneinheit 11 werden die Spannungen $U_{CVAR}$ und $U_{CW}$ für die Konverter CVAR und CW berechnet, so dass die Blindleistung und die Wirkleistung, die durch den Regler 12 bestimmt werden, jeweils durch den Konverter CVAR, CW umgesetzt werden. Für die beiden Konverter CW, CVAR ist jeweils eine Konvertersteuerungseinheit 13, 14 vorgesehen, um Leistungshalbleiterschalter zu steuern.

Das Funktionsprinzip der Anordnung 10 wird anhand der Ersatzschaltung von Fig. 5 erläutert. Die beiden Konverter CW, CVAR und die Konverterinduktivität werden durch zwei Spannungsquellen $U_{CW}$ und $U_{CVAR}$ sowie eine Induktivität L in der Ersatzschaltung 15 berücksichtigt. Die Induktivität L ist als Drossel in einem der Konverter realisiert, alternativ kann sie auch verteilt sein. Die gesamte Spannung der Konverteranordnung, das heißt die Spannung $U_{SUM}$ ergibt sich als die Summe der Spannungen der beiden Spannungsquellen $U_{CW}$ und $U_{CVAR}$. Die Netzspannung, das heißt die Spannung an den Klemmen der Anordnung, wird durch die Spannungsquelle $U_{NET}$ dargestellt. Die Spannung $U_L$ ist die Spannung, die sich auf der Induktivität L entwickelt. $I_L$ ist der Strom, der sich aus den Spannungen und der Induktivität in der Ersatzschaltung 15 ergibt.

Bei der Erläuterung der Funktion und des Steuerungsprinzips werden der Widerstand und die daraus resultierende Verlustleistung an der Induktivität L und in den Konvertern CW und CVAR vernachlässigt, da diese Werte vergleichsweise klein sind.

Aus der in Fig. 5 gezeigten Ersatzschaltung 15 ergeben sich die folgenden Gleichungen, wobei P für die Wirkleistung und Q für die Blindleistung, die vom Netz in die Anordnung fließen, stehen. Die Abkürzung $X_L$ bezeichnet den Blindwiderstand der Induktivität L. Abgesehen von $X_L$ sind alle Größen in den folgenden Gleichungen komplex, das heißt sie besitzen einen reellen und einen imaginären Anteil. Wie dem Fachmann außerdem ersichtlich ist, handelt es sich bei $U_{NET}$, $U_{CW}$, $U_{CVAR}$, $U_L$, $I_L$ um Wechselspannungen und einen Wechselstrom, deren Effektivwert in den folgenden Gleichungen eingesetzt wird. Für die Ersatzschaltung 15 von Fig. 5 gelten die folgenden Gleichungen:

$$I_L = \frac{P - jQ}{U_{NET}}$$

$$U_L = j \cdot X_L \cdot I_L$$

$$U_{SUM} = U_{NET} - U_L$$

Damit der Konverter CW die gesamte Wirkleistung übernimmt und sich ausschließlich an der Wirkleistung beteiligt, muss die Spannung $U_{CW}$ in Phase mit dem Strom $I_L$ sein, da $I_L$ auch der Strom ist, der durch den Konverter $U_{CW}$ fließt. Andererseits ist die Spannung $U_{CW}$ eine Komponente von $U_{SUM}$. Daraus ergibt sich die folgende Gleichung:

$$U_{CW} = |U_{SUM}| \cdot \cos[\arg(U_{SUM}) - \arg(I_L)] \cdot e^{j \cdot \arg(I_L)}$$

Daraus ergibt sich die Spannung

$$U_{CVAR} = U_{SUM} - U_{CW} \ .$$

Daraus ergibt sich, dass die Phasendifferenz zwischen $U_{CVAR}$ und $I_L$ 90 Grad beträgt, daher beteiligt sich der Konverter CVAR ausschließlich an der Blindleistung. Somit kann $U_{CVAR}$ alternativ folgendermaßen berechnet werden:

$$U_{CVAR} = |U_{SUM}| \cdot \sin[\arg(U_{SUM}) - \arg(I_L)] \cdot e^{j \cdot [\arg(I_L) + \pi/2]}$$

Die Funktionsweise der Anordnung zur Kompensation von Blindleistung und Wirkleistung wird nachfolgend anhand der Figuren 6 - 11 erläutert, es handelt sich dabei um Vektordiagramme der auftretenden Spannungen. Für diese Diagramme wurden typische Werte wie z. B. $U_{NET}$ = 100 kV und $X_L$ = 100 Ohm angenommen. Man erkennt, dass die Spannung $U_L$ gleich der Differenz zwischen $U_{NET}$ und $U_{SUM}$ ist. Zusätzlich ist in den Vektordiagrammen auch der Strom $I_L$ dargestellt. Bekanntlich eilt der Strom $I_L$ der Spannung $U_L$ stets um 90 Grad nach. Die Netzspannung $U_{NET}$ liefert in den Beispielen der Figuren 6 bis 11 jeweils die Phasenreferenz, daher beträgt deren Phase gleich 0, die Netzspannung $U_{NET}$ wird daher durch einen waagerechten Vektor dargestellt.

Aus den Figuren 6 - 9 ergibt sich, dass die Spannung $U_{CVAR}$ eines Konverters CVAR, der für die Kompensation von Blindleistung verantwortlich ist, nicht in Phase mit der Netzspannung ist.

Figur 6 zeigt eine Situation, in der die Anordnung 10 MW positive Wirkleistung und 10 MVAR Blindleistung aufnimmt. Vom Netz wird die Anordnung somit als Widerstand und Drossel gesehen. Wie bereits erwähnt wurde, eilt $I_L$ der Spannung $U_L$ um 90 Grad nach. Die Spannung $U_{CW}$ ist in Phase mit $I_L$, da die Wirkleistung positiv ist. Die Spannung $U_{CVAR}$ eilt $I_L$ um 90 Grad voraus, da die Blindleistung positiv ist.

Fig. 7 zeigt eine Situation, in der die Anordnung 10 MW negative Wirkleistung und 10 MVAR positive Blindleistung liefert. Dementsprechend arbeitet die Anordnung als Generator und Kondensator. Die Spannung $U_{CW}$ hat die umgekehrte Phase von $I_L$ und die Spannung $U_{CVAR}$ eilt $I_L$ um 90 Grad nach.

In Fig. 8 ist eine Situation gezeigt, in der die Anordnung 10 MW positive Wirkleistung aufnimmt und 10 MVAR Blindleistung liefert, daher wird die Anordnung vom Netz als ein Widerstand und ein Kondensator gesehen. Die Spannung $U_{CW}$ hat die gleiche Phase wie $I_L$ und die Spannung $U_{CVAR}$ eilt $I_L$ um 90 Grad nach.

Fig. 9 zeigt eine Situation, in der die Anordnung 10 MW liefert (negative Wirkleistung) und ca. 10 MVAR aufnimmt, wie ein Generator und eine Drossel. Die Spannung $U_{CW}$ hat die umgekehrte Phase von $I_L$ und die Spannung $U_{CVAR}$ eilt $I_L$ um 90 Grad voraus.

Fig. 10 zeigt eine besondere Situation, in der die Anordnung reine Wirkleistung aufnimmt. Daher sind die Spannungen $U_{NET}$, $U_{CW}$ und der Strom $I_L$ miteinander in Phase. Zudem weisen $U_{NET}$ und $U_{CW}$ den gleichen Betrag auf. Der Konverter CVAR gleicht die Blindleistung an der Drossel L mit seiner Spannung $U_{CVAR}$ aus und regelt die Wirkleistung der Anordnung.

Fig. 11 zeigt eine besondere Situation, in der die Spannung $U_{CW}$ am Konverter CW null ist. Die Anordnung weist somit keine Wirkleistung auf, dabei sind $U_{CVAR}$ und $U_{NET}$ in Phase und eilen $I_L$ nach. In diesem Beispiel ist die Blindleistung negativ, die Anordnung wird vom Netz wie ein Kondensator gesehen.

Das erste der erwähnten Probleme, nämlich die Dauerbelastung der Energiespeicher durch Blindleistung, wird von der Anordnung gelöst, indem der Konverter CW, mit dem der Energiespeicher verbunden ist, nur zum Wirkleistungsanteil beiträgt, so dass seine Spannung $U_{CW}$ auf einen geringen Wert oder sogar bei null gehalten werden kann, während der Konverter CVAR die Blindleistung kompensiert. Dementsprechend wird der Energiespeicher am Konverter CW im Dauerbetrieb entsprechend gering oder überhaupt nicht belastet, wodurch dessen Lebensdauer beträchtlich erhöht wird. Gleichzeitig erfolgt die Blindleistungskompensation durch den Konverter CVAR, wie in Fig. 11 gezeigt ist. Dabei ist es von Vorteil, dass der Energiespeicher nicht durch andere Mittel, z. B. mechanische Schalter, getrennt werden muss, so dass er ohne Verzug angesprochen werden kann.

Bei Bedarf, z. B. zur Ladung des Energiespeichers oder zur Stabilisierung des Hochspannungsnetzes nach einer Störung, wird die Wirkleistung durch den Konverter gesteuert, so dass die Aufnahme von Energie aus dem Hochspannungsnetz oder die Einspeisung von Energie aus dem Energiespeicher in das Netz von der Steuereinheit 9 geregelt werden kann. Dabei wird die Blindleistung durch den Konverter CVAR entsprechend dem Bedarf zur Verfügung gestellt oder sie ist null. Die Figuren 6 - 10 zeigen Situationen, wenn Blindleistung durch den Konverter CVAR zur Verfügung gestellt wird. Fig. 11 zeigt die Situation, wenn die Blindleistung null ist.

Das zweite der eingangs erwähnten Probleme, nämlich ein unkontrolliert hoher Ladestrom beim Einschalten wird durch die Anordnung 10 gelöst, indem der Strom mittels des Konverters CVAR begrenzt wird, selbst wenn die Spannung am Konverter CW kleiner als die Netzspannung oder sogar null ist, wie in dem Beispiel von Fig. 11 gezeigt ist. Der Konverter CVAR muss lediglich für die Blindleistung ausgelegt werden, so dass seine Kondensatoren eine dafür abgestimmte, angemessene Kapazität aufweisen. Dadurch können die Kondensatoren beim Start schnell und ohne Überstrom geladen werden, ohne dass dafür irgendwelche aufwendigen Mittel erforderlich wären. Dementsprechend ist die Anordnung 10 unmittelbar nach dem Einschalten verfügbar.

Da der Konverter CVAR den Strom effektiv begrenzen kann, entsteht eine große Freiheit im Hinblick auf die Spannung am Konverter CW und an den Energiespeicherelementen, die diesem Konverter zugeordnet sind. Dementsprechend kann das Laden und Entladen der Energiespeicher unabhängig von der Spannung jederzeit durchgeführt werden, was eine maximale Energieausbeute ermöglicht. Auf diese Weise wird das dritte der eingangs erwähnten Probleme, nämlich die Abhängigkeit der Energiespeicher vom Ladungszustand, beseitigt. Zudem können die Submodule des Konverters vergleichsweise einfach aufgebaut sein, da kein "Chopper" oder dergleichen wie im Stand der Technik benötigt wird.

Fig. 12 zeigt ein Beispiel einer Anordnung 18 zur Kompensation von Blindleistung und Wirkleistung, bei dem der Konverter CW als modularer, mehrstufiger Konverter mit Submodulen 16 aus H-Brücken (Vollbrücken) gebildet ist. Eine derartige H-Brücke zeichnet sich dadurch aus, dass sie bzw. ihre Klemmspannung drei Zustände (null, plus, minus) einnehmen kann. In Fig. 12 erkennt man, dass anstelle eines üblichen DC-Kondensators ein Energiespeicherelement 17 vorgesehen ist, das in dem dargestellten Beispiel als Lithium-Ionen-Batterie ausgebildet ist. Alternativ könnte das Energiespeicherelement auch ein Doppelschichtkondensator sein. Dementsprechend wird auch durch die in Fig. 12 gezeigte Anordnung 18 das Prinzip einer Reihenschaltung von zwei Konvertern verwirklicht, von denen einer für die Blindleistungskompensation und einer für die Wirkleistung vorgesehen ist.

Fig. 13 zeigt ein weiteres Beispiel mit einer Anordnung 19, bei der beide Konverter CW und CVAR dreiphasig als modulare, mehrstufige Konverter ausgebildet sind, wobei die gesamte Anordnung 19 sechs Klemmen (X11, X12, X13, X41, X42, X43) aufweist. Die Anordnung 19 kann daher sowohl in Sternschaltung als auch in Dreieckschaltung geschaltet sein. In Fig. 13 sind zwischen den beiden Konvertern CW, CVAR Induktivitäten 20 dargestellt, diese sind allerdings optional und nicht zwingend erforderlich. In Fig. 13 erkennt man, dass ein Submodul 16 des Konverters CW ein Energiespeicherelement 17 aufweist, entsprechend dem Beispiel von Fig. 12. Andererseits weist ein Submodul 21 des Konverters CVAR einen DC-Kondensator 22 auf.

Fig. 14 zeigt ein weiteres Beispiel, bei dem beide Konverter CW, CVAR als modulare mehrstufige Konverter ausgebildet sind, wobei CW sterngeschaltet ist und CVAR im Dreieck geschaltet ist. Die Induktivitäten 23 der Anordnung 24 sind innerhalb des Dreiecks geschaltet.

Fig. 15 zeigt eine Anordnung 25 bestehend aus einem Konverter 26 zur Kompensation von Blindleistung und einem Konverter 27 zur Kompensation von Wirkleistung. Die Konverter 26, 27 entsprechen von ihrem Aufbau her dem in Fig. 13 gezeigten Beispiel. Die Leistungshalbleiterschalter der Konverter 26, 27 können als IGBT, IGCT oder GTO ausgebildet sein.

In Fig. 15 erkennt man, dass parallel zu dem Konverter 27 für die Kompensation von Wirkleistung ein Verbund aus antiparallel geschalteten Thyristoren 28 geschaltet ist. Während der Abgabe von Blindleistung werden die Thyristoren 28 permanent gezündet, so dass die Energiespeicherzellen (Konverter 27) nicht angesteuert werden. In diesem Zustand überbrücken die Thyristoren 28 den Konverter 27, dadurch werden höhere Verluste vermieden, die auftreten würden, wenn Strom durch den Konverter 27 fließen würde, denn dann würde der Strompfad immer durch einen IGBT und eine Diode führen. Sobald Wirkleistung abgegeben werden soll, werden die Thyristoren 28 blockiert und die Energiespeicherzellen (Konverter 27) angesteuert.

Fig. 16 zeigt ein Phasenmodul 29, das als Reihenschaltung einer Induktivität 30, mehrerer Konverter zur Blindleistungskompensation 26 und mehrerer Konverter zur Wirkleistungskompensation 27 ausgebildet ist.

Die Anordnung von Fig. 17 ist ähnlich wie Fig. 16 aufgebaut und umfasst zusätzlich die antiparallel geschalteten Thyristoren 28, die in Reihe mit einer Kommutierungsinduktivität 32 angeschlossen sind. Die Thyristoren 28 und die Kommutierungsinduktivität 32 sind parallel zu dem Konverter 27 zur Kompensation von Wirkleistung angeschlossen. In Fig. 17 erkennt man, dass die Thyristoren 28 so geschaltet sind, dass sie mehrere Energiespeicher bzw. mehrere Konverter 27 überbrücken können. Dies ist möglich, da die Thyristoren 28 eine höhere Sperrspannung als die IGBTs der Konverter 27 aufweisen.

Fig. 18 zeigt schließlich ein Phasenmodul 33, bei dem anstelle der Induktivität 30 und der Kommutierungsinduktivität 32 eine Duplexdrossel 34 vorgesehen ist, die sowohl mit den im Verbund geschalteten Thyristoren 28 als auch mit den Konvertern 27 zur Kompensation von Wirkleistung verbunden ist, die in Reihe mit den Konvertern 26 zur Kompensation von Blindleistung geschaltet sind. In Übereinstimmung mit der Schaltung von Fig. 17 sind auch hier die Thyristoren 28 so angeordnet bzw. geschaltet, dass sie mehrere Konverter 27 überbrücken, wodurch z.B. die Verluste von sechs IGBTs und sechs Dioden durch die Verluste eines einzigen Thyristors ersetzt werden können.

Die verschiedenen, in den Figuren 16, 17 und 18 gezeigten Phasenmodule 29, 31 und 33 können in Sternschaltung oder in Dreieckschaltung miteinander verbunden sein.

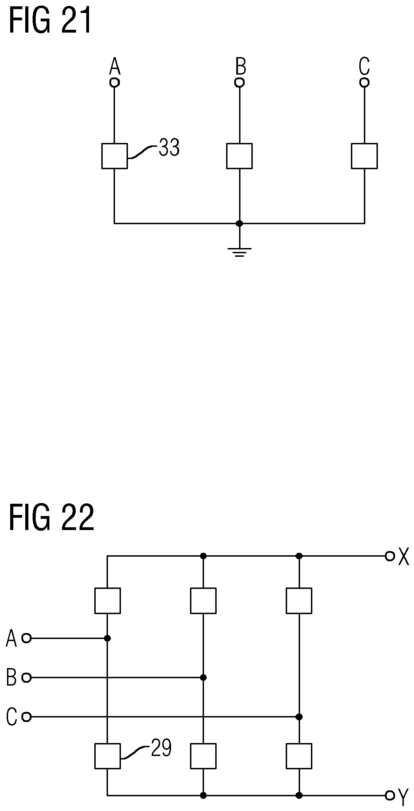

Die Fig. 19 bis 22 zeigen entsprechende Anwendungen, wobei Fig. 19 eine Schaltung zeigt bei der mehrere Phasenmodule 29 in Dreieckschaltung verbunden sind. Fig. 20 zeigt eine Anordnung mehrerer Phasenmodule 31 in Form einer Sternschaltung dar. Fig. 21 zeigt eine weitere Anordnung mehrerer Phasenmodule 33. Fig. 22 zeigt eine Schaltungsanordnung mit mehreren Phasenmodulen 29, die bei HVDC (Hochspannungsgleichspannungs-übertragung) eingesetzt werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

**1.**  Anordnung (10) zur Kompensation von Blindleistung und Wirkleistung in einem Hochspannungsnetz, wobei die Anordnung (10) einen ersten Konverter CW aufweist, der für die Kompensation von Wirkleistung ausgebildet ist, sowie einen zweiten, in Reihe geschalteten Konverter CVAR, der für die Kompensation von Blindleistung ausgebildet ist, wobei die von der Anordnung (10) gelieferte oder abgebbare Spannung der Summe der Spannungen des ersten Konverters CW und des zweiten Konverters CVAR entspricht, wobei die Konverter CW und CVAR jeweils H-Brücken aufweisen,
**dadurch gekennzeichnet, dass**
antiparallel geschaltete Thyristoren (28) parallel zu den einzelnen H-Brücken des Konverters CW geschaltet sind.

**2.**  Anordnung nach Anspruch 1,
wobei die Anordnung (10) eine Steuereinheit (9) aufweist, die zum Messen von in dem Hochspannungsnetz vorhandenen Spannungen und Strömen ausgebildet ist und die die von dem ersten und dem zweiten Konverter CW und CVAR abgegebenen Spannungen derart festlegt, dass eine geforderte Wirkleistung P und Blindleistung Q vom Hochspannungsnetz aufgenommen oder in das Hochspannungsnetz eingespeist wird.

3. Anordnung nach Anspruch 2,
**dadurch gekennzeichnet, dass**
die beiden Konverter CW und CVAR durch die Steuereinheit (9) so steuerbar sind, dass allein der erste Konverter CW die Wirkleistung und allein der zweite Konverter CVAR die Blindleistung kompensiert.

4. Anordnung nach einem der vorangehenden Ansprüche,
**dadurch gekennzeichnet, dass** der erste Konverter CW wenigstens ein Energiespeicherelement (17) aufweist oder mit einem Energiespeicher verbunden ist.

5. Anordnung nach Anspruch 4,
**dadurch gekennzeichnet, dass** das Energiespeicherelement (17) als Kondensator oder Doppelschichtkondensator oder Batterie ausgebildet ist.

6. Anordnung nach einem der vorangehenden Ansprüche,
**dadurch gekennzeichnet, dass** der erste Konverter CW und/oder der zweite Konverter CVAR eine Drossel aufweist.

7. Anordnung nach einem der Ansprüche 2 bis 6,
**dadurch gekennzeichnet, dass** die Steuereinheit (9) dazu ausgebildet ist, die von dem ersten Konverter CW abgegebene Spannung so zu regeln, dass sie in Phase mit oder gegenphasig zu dem durch die Konverter fließenden Strom ist.

8. Anordnung nach einem der Ansprüche 2 bis 7,
**dadurch gekennzeichnet, dass** die Steuereinheit (9) den Konverter CVAR so steuert, dass der durch den Konverter CVAR fließende Strom begrenzt ist.

9. Anordnung nach einem der vorangehenden Ansprüche,
**dadurch gekennzeichnet, dass** der Konverter CW als modularer mehrstufiger Konverter ausgebildet ist und wenigstens zwei in Reihe geschaltete H-Brücken mit jeweils wenigstens einem Energiespeicherelement (17) aufweist.

10. Anordnung nach einem der vorangehenden Ansprüche,
**dadurch gekennzeichnet, dass** der Konverter CVAR als modularer mehrstufiger Konverter ausgebildet ist und wenigstens zwei in Reihe geschaltete H-Brücken mit jeweils wenigstens einem Kondensator (22) aufweist.

11. Anordnung nach einem der Ansprüche 7 bis 9,
**dadurch gekennzeichnet, dass** die H-Brücke aus Leistungshalbleiterschaltern aufgebaut ist.

12. Anordnung nach einem der vorangehenden Ansprüche,
**dadurch gekennzeichnet, dass** sie einen Schalter zum Überbrücken des Konverters CW aufweist, wobei der Schalter vorzugsweise als mechanischer Schalter oder als Halbleiterschalter, insbesondere als Thyristorschalter, ausgebildet ist.

13. Anordnung nach einem der vorangehenden Ansprüche,
**dadurch gekennzeichnet, dass** die Konverter CVAR und CW jeweils dreiphasig ausgebildet sind.

14. Anordnung nach Anspruch 14,
**dadurch gekennzeichnet, dass** die Konverter CVAR und CW in einer Sternschaltung oder einer Dreieckschaltung geschaltet sind.

**Claims**

1. Assembly (10) for compensating reactive power and active power in a high-voltage network, wherein the assembly (10) comprises a first converter CW, which is designed for the compensation of active power, and a second series-connected converter CVAR, which is designed for the compensation of reactive power, whereby the voltage supply or output from the assembly (10) corresponds to the sum of the voltages of the first converter CW and the second converter CVAR, wherein the converters CW and CVAR each comprise H-bridges, **characterized in that** antiparallel-connected thyristors (28) are connected in parallel to the individual H-bridges of the converter CW.

2. Assembly according to Claim 1, wherein
the assembly (10) comprises a control unit (9), which is configured for the measurement of voltages and currents present on the high-voltage network, and which determines the voltage outputs from the first and the second converters CW and CVAR such that a requisite active power P and a reactive power Q are taken up from the high-voltage network or fed into the high-voltage network.

3. Assembly according to Claim 2, **characterized in that**
the two converters CW and CVAR are controlled by the control unit (9), such that the first controller CW compensates active power only, and the second converter CVAR compensates reactive power only.

4. Assembly according to one of the preceding claims,
**characterized in that** the first converter CW comprises at least one energy storage element (17), or is connected to an energy store.

5. Assembly according to Claim 4,
**characterized in that** the energy storage element (17) is comprised as a capacitor or double-layer capacitor, or as a battery.

6. Assembly according to one of the preceding claims,
**characterized in that** the first converter CW and/or the second converter CVAR comprises a choke device.

7. Assembly according to one of Claims 2 to 6, **characterized in that** the control unit (9) is configured to control the voltage output of the first converter CW such that said output is in phase with, or in phase opposition to the current flowing in the converter.

8. Assembly according to one of Claims 2 to 7, **characterized in that** the control unit (9) controls the converter CVAR such that the current flowing in the converter CVAR is limited.

9. Assembly according to one of the preceding claims,
**characterized in that** the converter CW is configured as a modular, multi-stage converter, and comprises at least two series-connected H-bridges with at least one energy storage element (17) respectively.

10. Assembly according to one of the preceding claims,
**characterized in that** the converter CVAR is configured as a modular, multi-stage converter, and comprises at least two series-connected H-bridges with at least one capacitor (22) respectively.

11. Assembly according to one of Claims 7 to 9,
**characterized in that** the H-bridge is configured of power semiconductor switches.

12. Assembly according to one of the preceding claims,
**characterized in that** it comprises a switch for the bridging of the converter CW, whereby the switch is preferably configured as a mechanical switch or as a semiconductor switch, specifically as a thyristor switch.

13. Assembly according to one of the preceding claims,
**characterized in that** the converters CVAR and CW are each configured as three-phase devices.

14. Assembly according to Claim 13, **characterized in that**
the converters CVAR and CW are connected in a star-connected circuit or a delta-connected circuit.

**Revendications**

1. Agencement (10) de compensation d'une puissance réactive et d'une puissance active dans un réseau à haute tension, l'agencement (10) ayant un premier convertisseur CW constitué pour la compensation de la puissance active, ainsi qu'un deuxième convertisseur CVAR monté en série et constitué pour la compensation de la puissance réactive, la tension fournie ou pouvant être appliquée par l'agencement (10) correspondant à la somme des tensions du premier convertisseur CW et du deuxième convertisseur CVAR, les convertisseurs CW et CVAR ayant chacun des ponts en H,
   **caractérisé en ce que**
   des thyristors (28) montés tête-bêche sont montés en parallèle avec les divers ponts en H du convertisseur CW.

2. Agencement suivant la revendication 1,
   dans lequel l'agencement (10) a une unité (9) de commande constituée pour mesurer des tensions et des courants présents dans le réseau à haute tension et fixant les tensions appliquées par le premier et le deuxième convertisseur CW et CVAR, de manière à ce qu'une puissance P active et une puissance Q réactive exigée soient absorbées par le réseau à haute tension ou soient injectées dans le réseau à haute tension.

3. Agencement suivant la revendication 2,
   **caractérisé en ce que**
   les deux convertisseurs CW et CVAR peuvent être commandés par l'unité (9) de commande, de manière à ce que seulement le premier convertisseur CW compense la puissance active et seulement le deuxième convertissement CVAR la puissance réactive.

4. Agencement suivant l'une des revendications précédentes,
   **caractérisé en ce que**
   le premier convertisseur CW a au moins un élément (17) d'accumulation d'énergie ou est relié à un accumulateur d'énergie.

5. Agencement suivant la revendication 4,
   **caractérisé en ce que**
   l'élément (17) d'accumulation d'énergie est constitué sous la forme d'un condensateur ou d'un condensateur à double couches ou d'une batterie.

6. Agencement suivant l'une des revendications précédentes,
   **caractérisé en ce que**
   le premier convertisseur CW et/ou le deuxième convertisseur CVAR a une bobine.

7. Agencement suivant l'une des revendications 2 à 4,
   **caractérisé en ce que**
   l'unité (9) de commande est constituée pour réguler la tension appliquée par le premier convertisseur CW, de manière à ce qu'elle soit en phase ou en opposition de phase au courant passant dans le convertisseur.

8. Agencement suivant l'une des revendications 2 à 7,
   **caractérisé en ce que**
   l'unité (9) de commande du convertisseur CVAR est commandée de manière à limiter le courant passant dans le convertisseur CVAR.

9. Agencement suivant l'une des revendications précédentes,
   **caractérisé en ce que**
   le convertisseur CW est constitué sous la forme d'un convertisseur modulaire à plusieurs étages et à au moins deux ponts en H montés en série, ayant chacun au moins un élément (17) d'accumulation d'énergie.

10. Agencement suivant l'une des revendications précédentes,
    **caractérisé en ce que**
    le convertisseur CVAR est constitué sous la forme d'un convertisseur modulaire à plusieurs étages et à au moins deux ponts en H montés en série, ayant chacun au moins un condensateur (22).

11. Agencement suivant l'une des revendications 7 à 9,

**caractérisé en ce que**
le pont en H est formé d'interrupteurs de puissance à semiconducteur.

12. Agencement suivant l'une des revendications précédentes,
**caractérisé en ce qu'**
il a un interrupteur shuntage du convertisseur CW, l'interrupteur étant constitué de préférence sous la forme d'un interrupteur mécanique ou d'un interrupteur à semiconducteur, notamment d'un interrupteur à thyristor.

13. Agencement suivant l'une des revendications précédentes,
**caractérisé en ce que**
les convertisseurs CVAR et CW sont constitués chacun de manière triphasée.

14. Agencement suivant la revendication 13,
**caractérisé en ce que**
les convertisseurs CVAR et CW sont montés dans un circuit en étoile ou en un circuit en triangle.

# FIG 1
(Stand der Technik)

# FIG 2
(Stand der Technik)

# FIG 3
(Stand der Technik)

# FIG 4

# FIG 5

## FIG 6

$U_{NET}$

$U_{SUM}$

$U_L$

$U_{CW}$

$I_L$

$U_{CVAR}$

## FIG 7

$I_L$

$U_{SUM}$

$U_{NET}$

$U_L$

$U_{CW}$

$U_{CVAR}$

## FIG 8

$U_{CW}$

$U_{CVAR}$

$U_{NET}$

$I_L$

$U_{SUM}$

$U_L$

## FIG 9

$U_{CW}$

$U_{CVAR}$

$U_{SUM}$

$U_L$

$U_{NET}$

$I_L$

## FIG 10

$U_{NET}$   $U_{SUM}$

$U_{CVAR}$

$U_L$

$U_{CW}$

$I_L$

## FIG 11

$U_{NET}$

$U_L$

$I_L$

$U_{CW}=0$

$U_{CVAR}=U_{SUM}$

FIG 12

FIG 13

FIG 14

FIG 15

# FIG 16

# FIG 17

# FIG 18

FIG 19

A    B    C

29

FIG 20

A    B    C

31

**FIG 21**

**FIG 22**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010124706 A1
- WO 2010040388 A1